# EUROPÄISCHE PATENTANMELDUNG

(11) **EP 4 685 384 A2**
(43) Veröffentlichungstag der Anmeldung: **28.01.2026**
(21) Anmeldenummer: 25223378.8
(22) Anmeldetag: 30.06.2022
(51) Int. Cl.: F17C 5/00

(54) **VERFAHREN UND SYSTEM ZUM BEFÜLLEN VON FLUIDBEHÄLTERN**

(30) Priorität: 30.06.2021 DE 102021206794
(62) Teilanmeldung aus: 22741216.0
(71) Anmelder: EDAG Engineering GmbH, 65205 Wiesbaden (DE)
(72) Erfinder: KOCH, Marius, 53881 Euskirchen (DE); JARMER, Florian, 28816 Stuhr (DE)
(74) Vertreter: Isarpatent

(57) **Zusammenfassung**

Die vorliegende Erfindung betrifft ein Verfahren zum Befüllen von Fluidbehältern, mit den Schritten: Schaffen einer kontrollierten Atmosphäre in welcher Fluidbehälter positioniert sind, bei der sich der Druck gezielt steuern lässt und eine Druckdifferenz zwischen dem Äußeren und dem Inneren des Fluidbehälters derart einstellt, dass ein Schaden an einem Innen-Liner der Fluidbehälter verhindert wird, wobei der die Fluidbehälter umgebende Raum als Druckkammer ausgebildet ist und ein geschlossenes System mit einstellbaren Druckverhältnissen bereitstellt, wobei die Druckkammer den Druckkammerinnenraum hermetisch gegenüber einer Umgebung abschließt; Evakuieren des Fluidbehälters; und bei Erreichen eines Zielunterdrucks, bei dem ein Fassungsraum des Fluidbehälters ein Vakuum aufweist beziehungsweise lediglich eine vorbestimmte akzeptable Restmaterie enthält, Befüllen des Fassungsraums des Fluidbehälters mit einem Fluid, welches nicht durch das zuvor in dem Fassungsraum enthaltene Fluid kontaminiert ist.

## Beschreibung

### GEBIET DER ERFINDUNG

Die vorliegende Erfindung betrifft ein Verfahren zum Befüllen von Fluidbehältern, insbesondere von Fluidbehältern für den Betrieb von Wasserstoff betriebenen Brennstoffzellen, sowie ein System zum Befüllen von Fluidbehältern für den Betrieb von Wasserstoff betriebenen Brennstoffzellen.

### TECHNISCHER HINTERGRUND

Als eine Brennstoffzelle bezeichnet man eine galvanische Zelle, welche die chemische Reaktionsenergie eines kontinuierlich zugeführten Brennstoffs und eines Oxidationsmittels in elektrische Energie wandelt. Brennstoffzellen sind also keine Energiespeicher, sondern Energiewandler, denen ein Brennstoff (Energie in chemisch gebundener Form) zugeführt wird. Ein komplettes Brennstoffzellensystem kann aber zusätzlich einen Brennstoffspeicher enthalten. Derartige Brennstoffzellen sind allgemein bekannt und bedürfen daher keiner weiteren Erläuterung.

Beim Betrieb einer solchen Brennstoffzelle wird die chemisch gebundene Energie eines Brennstoffs direkt in Elektrizität umgewandelt. Bei herkömmlichen Brennstoffzellen wird unter anderem Wasserstoff als Reaktionsgas eingesetzt. Dabei ist die chemische Reinheit bzw. Konzentration des Wasserstoffs maßgeblich und dementsprechend setzen die Hersteller von Brennstoffzellen für die Reinheit bzw. Konzentration des Wasserstoffs enge Vorgaben. Um diese Vorgaben zu erreichen wird üblicherweise zunächst ein Vakuum in den Wasserstoffbehältern erzeugt, damit darin enthaltenes Gas entweicht, bevor die Wasserstoffbehälter mit Wasserstoff aus einem Wasserstofftanksystem befüllt werden.

Moderne Wasserstoffbehälter sind aus Gewichtsgründen in der Regel aus Verbundwerkstoffen aufgebaut und enthalten als Kern eine innenliegende Wandschicht aus Kunststoff, insbesondere aus Polyamid- oder Polyethylen, den so genannten Innen-Liner, der eine Diffusion des Wasserstoffs durch den Behälter hindurch verhindert. Aufgrund dieses Aufbaus können Leichtbaubehälter, insbesondere Leichtbaubehälter aus Verbundwerkstoffen, nicht schadenfrei unter Vakuum gesetzt werden, da deren Innen-Liner, welcher für die Einhaltung der vorgeschriebenen Permeationsgrenzen vorgesehen sind, zusammenfallen und Schaden nehmen würden. Aus diesen Gründen wird bei diesen nicht-vakuumfähigen Behältern oftmals ein so genanntes Druckwechselspülungs-Verfahren angewendet. Bei dem Druckwechselspülungs-Verfahren wird gasförmiger Stickstoff in einen geschlossenen Behälter gedrückt, um den Sauerstoff im Behälter zu verdrängen. Anschließend wird im Wechsel Wasserstoff befüllt und das resultierende Gemisch in die Atmosphäre entleert. Beim Abblasen tritt zunächst das bisher in dem Behälter enthaltene Gas aus. Der Prozess mit den Schritten Schließen - Einblasen - Öffnen - Ausblasen wird solange fortgesetzt bis die gewünschte Konzentration erreicht ist.

Jedoch weist das Druckwechselspülungs-Verfahren sehr hohe Prozesszeiten durch die mehrfache Vollbefüllung und Entleerung der Tanksysteme mit Wasserstoff auf. Ferner geht damit ein hoher Gasverbrauch einher, da das verwendete Gas durch den Eintrag von Stickstoff kontaminiert ist und deshalb nicht rückgeführt oder wiederverwendet werden kann.

### ZUSAMMENFASSUNG DER ERFINDUNG

Vor diesem Hintergrund liegt der vorliegenden Erfindung die Aufgabe zugrunde, ein verbessertes, insbesondere Resourcenschonenderes Verfahren bereitzustellen.

Erfindungsgemäß wird diese Aufgabe durch ein Verfahren mit den Merkmalen des Patentanspruchs 1 und/oder durch ein System mit den Merkmalen des Patentanspruchs 12 gelöst.

Gemäß einem ersten Aspekt der vorliegenden Erfindung wird ein Verfahren zum Befüllen von Fluidbehältern, insbesondere von Fluidbehältern für den Betrieb von Wasserstoff betriebenen Brennstoffzellen, bereitgestellt. Das erfindungsgemäße Verfahren umfasst folgende Schritte. Bereitstellen einer Druckkammer mit einem Druckkammerinnenraum. Positionieren eines Fluidbehälters innerhalb des Druckkammerinnenraums derart, dass ein Fassungsraum des Fluidbehälters fluidisch mit dem Druckkammerinnenraum verbunden ist. Evakuieren des Druckkammerinnenraums bis zu einem Zielunterdruck derart, dass sich aufgrund der fluiden Kopplung zunächst eine negative Druckdifferenz in dem Druckkammerinnenraum gegenüber dem Fassungsraum ausbildet. Befüllen des Fluidbehälters, indem ein Fluid in den Fassungsraum eingeleitet wird.

Gemäß einem zweiten Aspekt der vorliegenden Erfindung wird ein System zum Befüllen von Fluidbehältern für den Betrieb von Wasserstoff betriebenen Brennstoffzellen, insbesondere zur Ausführung eines erfindungsgemäßen Verfahrens, bereitgestellt. Das erfindungsgemäße System umfasst eine Druckkammer mit einem fluiddicht ausgebildeten Druckkammerinnenraum, sowie einen Fluidbehälter, der innerhalb des Druckkammerinnenraums positioniert und dessen Fassungsraum mit dem Druckkammerinnenraum fluidisch verbindbar ist. Ferner umfasst das erfindungsgemäße System eine Verdichtereinrichtung, die ausgebildet ist, eine negative Druckdifferenz in dem Druckkammerinnenraum gegenüber dem Fassungsraum zu erzeugen; wobei das System dazu ausgebildet ist, ein erfindungsgemäßes Verfahren auszuführen.

Die der vorliegenden Erfindung zugrundeliegende Idee besteht darin, eine kontrollierte kompakte Atmosphäre zu schaffen, in welcher Fluidbehälter positioniert sind, bei der sich der Druck gezielt steuern lässt und eine Druckdifferenz zwischen dem Äußeren und dem Inneren der Fluidbehälter einstellt. Diese Druckdifferenz wird derart eingestellt, dass ein Schaden an dem Innen-Liner der Fluidbehälter verhindert wird. Vorteilhafterweise wird ein Fluidbehälter zunächst evakuiert, indem in einem den Fluidbehälter umgebenden Raum eine negative Druckdifferenz beziehungsweise ein Unterdruck gegenüber dem Fassungsraum des Fluidbehälters erzeugt wird, sodass ein in dem Fassungsraum befindliches Fluid in den Raum ausströmt. Dabei kann ferner in der Druckkammer eine negative Druckdifferenz im Vergleich zu einer die Druckkammer umgebenden Umgebungsatmosphäre erzeugt werden. Anschließend wird beim Erreichen des Zielunterdrucks, bei dem der Fassungsraum ein Vakuum aufweist beziehungsweise lediglich eine vorbestimmte akzeptable Restmaterie enthält, der Fassungsraum des Fluidbehälters mit einem beliebigen Fluid befüllt, welches nicht durch das zuvor in dem Fassungsraum enthaltene Fluid kontaminiert ist. Der den Fluidbehälter umgebende Raum ist erfindungsgemäß als Druckkammer ausgebildet, also ein geschlossenes System mit einstellbaren Druckverhältnissen. Die Druckkammer schließt den Druckkammerinnenraum hermetisch, das heißt fluiddicht gegenüber einer Umgebung ab.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform des Verfahrens weist der Fluidbehälter einen Innen-Liner auf, der dazu ausgebildet ist, den Fassungsraum des Fluidbehälters gasdicht nach außen abzuschließen. Der Innen-Liner entspricht der inneren Schicht von Fluidbehältern aus Verbundwerkstoffen, insbesondere Kompositgasflaschen, und bildet eine dünnwandige Sperrschicht, um ein Diffundieren von Gasen durch die Wand des Fluidbehälters zu verringern. Somit können auch Werkstoffe für Fluidbehälter verwendet werden, die aufgrund ihrer Werkstoffeigenschaften oder Verarbeitungsformen nicht hinreichend gasdicht sind, jedoch andere geeignete Eigenschaften mit sich bringen. Beispielsweise kann dadurch das Gewicht des Fluidbehälters reduziert werden oder thermische und/oder elektrische Leitfähigkeiten begünstigt beziehungsweise verringert werden. Ferner kann der Innen-Liner ein Ventil tragen.

Gemäß einer weiteren Ausführungsform umfasst das Verfahren nach dem Schritt des Evakuierens ferner den Schritt Umschalten von einem Evakuierungszustand, in dem ein fluidischer Austausch zwischen dem Fassungsraum des Fluidbehälters und dem Druckkammerinnenraum zugelassen wird, in einen Befüllzustand, in dem ein fluidischer Austausch zwischen dem Fassungsraum des Fluidbehälters und einem Fluidtank, welcher mit dem Fassungsraum fluidisch verbunden ist, zugelassen wird. Dabei ist dem Fachmann klar, dass in dem jeweiligen Zustand der fluidische Austausch gemäß dem jeweils anderen Zustand unterbunden ist. Das heißt in dem Evakuierungszustand wird der fluidische Austausch zwischen dem Fassungsraum des Fluidbehälters und dem Druckkammerinnenraum zugelassen, nicht jedoch der fluidische Austausch zwischen dem Fassungsraum des Fluidbehälters und dem Fluidtank. In dem Befüllzustand verhält es sich dementsprechend umgekehrt. Dabei kann das Umschalten automatisiert, insbesondere durch die Steuerungseinrichtung, oder von einem Benutzer gesteuert werden.

Die vorliegende Erfindung ist jedoch nicht auf die oben beschriebenen Zustände beschränkt, sondern kann darüber hinaus zum Beispiel auch einen Transportzustand aufweisen, in welchem der Fassungsraum nach außen fluidisch abgeschlossen ist. Das Umschalten wird beispielsweise durch ein steuerbares Mehrwegeventil ausgeführt, welches mit dem Fluidbehälter fluidisch verbunden ist.

Gemäß einer weiteren Ausführungsform des Verfahrens wird zumindest zeitweise während des Schritts des Evakuierens ein fluidischer Austausch zwischen dem Fassungsraum des Fluidbehälters und dem Druckkammerinnenraum verhindert, sodass zeitweise die Druckdifferenz zwischen dem Fassungsraum und dem Druckkammerinnenraum steigt. Der fluidische Austausch kann zum Beispiel durch ein Verschlusselement an einem Auslass des Fluidbehälters unterbunden werden. Auf diese Weise kann ein Schaden an dem Innen-Liner verhindert werden, indem die Druckänderung in dem Fassungsraum verlangsamt wird oder eine vorbestimmte Mindestdruckdifferenz eingehalten wird.

Gemäß einer weiteren Ausführungsform des Verfahrens wird der Zielunterdruck durch Verwendung einer Verdichtereinrichtung erzeugt. Die Verdichtereinrichtung ist mit der Druckkammer fluidisch gekoppelt und dazu ausgebildet, in dem Druckkammerinnenraum eine negative Druckdifferenz beziehungsweise einen Unterdruck im Vergleich zu der die Druckkammer umgebenden Umgebungsatmosphäre zu erzeugen. Die Verdichtereinrichtung ist insbesondere als Vakuumpumpe ausgebildet. Somit kann das Evakuieren unter vorgegebenen Parametern und prozesssicherer durchgeführt werden.

Gemäß einer weiteren Ausführungsform umfasst das Verfahren ferner den Schritt Verringern der negativen Druckdifferenz in dem Druckkammerinnenraum im Vergleich zu der die Drucckammer umgebenden Umgebungsatmosphäre bis der Druck in dem Druckkammerinnenraum dem Druck der Umgebungsatmosphäre entspricht. Auf diese Weise kann gewährleistet werden, dass die Druckzunahme in dem Druckinnenraum kontrolliert abläuft und darin angeordnete Geräte keinen Schaden nehmen.

Gemäß einer Weiterbildung wird der Schritt des Verringerns der negativen Druckdifferenz während dem Schritt des Befüllens des Fluidbehälters ausgeführt, wobei der Druck in dem Druckkammerinnenraum stets höchstens den Druck in dem Fassungsraum aufweist. Somit kann das Verfahren insgesamt beschleunigt werden, da zwei Schritte zeitlich parallel ablaufen.

Gemäß einer weiteren Ausführungsform des Verfahrens gleicht sich bei dem Schritt des Evakuierens die negative Druckdifferenz spätestens bei Erreichen des Zielunterdrucks von höchstens 0,5 bar abs wieder aus. Bei diesem Zielunterdruck kann vorteilhafterweise ein derart geeignetes Vakuum in dem Fassungsraum erzeugt werden, dass die Restmaterie in dem Fassungsraum der gewünschten Reinheit des anschließend eingefüllten Fluids nicht entgegensteht.

Gemäß einer weiteren Ausführungsform wird das Verfahren für eine initiale Befüllung des Fluidbehälters verwendet. Bei bereits zuvor mit demselben Fluid befüllten Fluidbehältern wird üblicherweise ein Restüberdruck in dem Fluidbehälter gegenüber der Umgebungsatmosphäre belassen, damit beim Wiederbefüllen keine Feuchtigkeit und/oder keine Fremdgase aufgrund des Restüberdrucks in den Fassungsraum eindringen. Für bisher unbeaufschlagte Fluidbehälter ist dies nicht der Fall, weshalb Feuchtigkeit und/oder Fremdgase, in der Regel Luft, in solchen Fluidbehältern enthalten sein kann, die bei der initialen Befüllung zuerst verringert werden müssen.

Gemäß einer weiteren Ausführungsform des Verfahrens enthält das Fluid Wasserstoff und wird aus einem Fluidtank, welcher mit dem Fassungsraum fluidisch verbunden ist, in den Fassungsraum eingeleitet. Wasserstoff wird insbesondere in Brennstoffzellen als Reaktionsgas zur Erzeugung von elektrischer Energie verwendet. Dabei wird der Wasserstoff mit einer Reinheit von mindestens 99,9 Vol.-%, insbesondere von mindestens 99,99 Vol.-% benötigt.

Gemäß einer weiteren Ausführungsform des Verfahrens ist der Fluidbehälter ein Typ IV-Behälter. Typ IV-Behälter werden insbesondere für Brennstoffzellen verwendet. Diese Behälter sind beispielsweise aus CFK-Verbundwerkstoffen hergestellt und weisen somit ein geringeres Gewicht auf als herkömmliche Behälter aus Stahl oder Leichtmetallen.

Gemäß einer Ausführungsform des Systems weist der Fluidbehälter einen Innen-Liner auf, der dazu ausgebildet ist, den Fassungsraum des Fluidbehälters gasdicht nach außen abzuschließen. Auf diese Weise kann der Fluidbehälter aus einem Werkstoff hergestellt sein, der leichter ist als herkömmliche gasdichte Werkstoffe, jedoch nicht die geforderte Permeabilität aufweist und folglich ohne den Innen-Liner den Fassungsraum nicht gasdicht abschließen könnte.

Gemäß einer weiteren Ausführungsform weist das System ferner einen Fluidtank auf, welcher mit dem Fassungsraum fluidisch verbindbar und dazu ausgebildet ist, ein Fluid in den Fassungsraum einzuleiten. Der Fluidtank kann entweder in dem Druckkammerinnenraum oder außerhalb der Druckkammer angeordnet sein. Ferner enthält der Fluidtank beispielsweise Industriegase, wie etwa Acetylen, Argon, Kohlenwasserstoffe, Sauerstoff, Stickstoff, Wasserstoff oder Kohlendioxid, Druckluft oder vergleichbare Fluide, wobei die genannten Fluide in gasförmigem und/oder flüssigem Aggregatszustand in dem Fluidtank enthalten sein können. Der Fluidtank kann in Abhängigkeit der geeigneten Lagerbedingungen des Fluids dementsprechend eine Isolierungseinrichtung und/oder eine Kühlungseinrichtung aufweisen.

Gemäß einer Weiterbildung weist das System ferner ein steuerbares Mehrwegeventil auf, das mit dem Fluidbehälter fluidisch verbunden und dazu ausgebildet ist, von einem Evakuierungszustand, in dem ein fluidischer Austausch zwischen dem Fassungsraum des Fluidbehälters und dem Druckkammerinnenraum zugelassen wird, in einen Befüllzustand, in dem ein fluidischer Austausch zwischen dem Fassungsraum des Fluidbehälters und dem Fluidtank zugelassen wird, umzuschalten. Dabei sperrt das Mehrwegeventil in dem jeweiligen Zustand den fluidischen Austausch gemäß dem jeweils anderen Zustand. Das heißt in dem Evakuierungszustand ist der fluidische Austausch zwischen dem Fassungsraum des Fluidbehälters und dem Druckkammerinnenraum zugelassen, während der fluidische Austausch zwischen dem Fassungsraum des Fluidbehälters und dem Fluidtank gesperrt ist. In dem Befüllzustand verhält es sich dementsprechend umgekehrt. Dabei kann das steuerbare Mehrwegeventil beispielsweise mit der Steuerungseinrichtung elektronisch gekoppelt sein.

Die vorliegende Erfindung ist jedoch nicht auf ein Mehrwegeventil beschränkt, welches nur die oben beschriebenen Zustände einstellen kann. Vielmehr kann das Mehrwegeventil darüber hinaus zum Beispiel weitere Einstellungen aufweisen, in welchen der Fassungsraum nach außen fluidisch abgeschlossen und/oder mit einem Drucksensor versehen ist.

Darüber hinaus ist der Druckkammerinnenraum beispielsweise derart bemessen, dass Personen diesen durch eine verschließbare Tür betreten und sich aufrecht stehend darin aufhalten können.

Ferner kann die Druckkammer optional einen Anschluss zum fluidischen Verbinden des Druckkammerinnenraums mit der Umgebung und/oder eine elektronische Kopplungseinrichtung aufweisen, durch welche zum Beispiel in dem Druckkammerinnenraum positionierte Vorrichtungen von außen gesteuert/energetisch versorgt werden können. Somit kann die Druckkammer kompakt dimensioniert sein, da insbesondere Versorgungsvorrichtungen wie etwa ein Fluidtank, eine Steuerungseinrichtung oder dergleichen außerhalb der Druckkammer vorgesehen sein können und dennoch in den im Betrieb verschlossenen Druckkammerinnenraum geleitet werden können. Nichtsdestoweniger können die beispielhaft zuvor genannten Versorgungsvorrichtungen jeweils auch in dem Druckkammerinnenraum angeordnet sein.

Das Positionieren des Fluidbehälters in dem Druckkammerinnenraum kann wahlweise manuell, automatisiert oder teilautomatisiert erfolgen. Zum Beispiel können ein oder mehrere Fluidbehälter auf einem Transportgerät gelagert sein und mit dem Transportgerät in den Druckkammerinnenraum transportiert werden.

Sofern mehrere Fluidbehälter in dem Druckkammerinnenraum angeordnet sind, können deren Fassungsräume jeweils unabhängig voneinander oder zumindest einige davon gemeinsam mit dem Druckkammerinnenraum fluidisch verbunden sein. Die fluide Kopplung zwischen dem Fassungsraum und dem Druckkammerinnenraum kann beispielsweise über eine Schlauchleitungseinrichtung vorgesehen sein, wobei Schläuche der Schlauchleitungseinrichtung insbesondere als formstabiler Schlauch ausgebildet sind. Alternativ oder zusätzlich kann die fluide Kopplung über ein Rohrleitungssystem vorgesehen sein. Die negative Druckdifferenz beziehungsweise der Unterdruck in dem Druckkammerinnenraum gegenüber dem Fassungsraum bewirkt, dass Fluide von dem Fassungsraum hin zu dem Druckkammerinnenraum strömen. Da der Fassungsraum dabei keine fluidischen Zuläufe aufweist, wird der Fassungsraum evakuiert solange die negative Druckdifferenz bestehen bleibt.

Der Zielunterdruck wird beispielsweise durch ein Barometer, insbesondere durch ein digitales Barometer, ein Quecksilberbarometer, ein Röhrenbarometer oder ähnliches gemessen. Der gemessene Wert wird wahlweise grafisch, textuell oder Mischformen daraus angezeigt. Zusätzlich kann das Barometer mit der Steuerungseinrichtung elektronisch gekoppelt sein und den gemessenen Wert an die Steuerungseinrichtung zur Überwachung/Regelung des Zielunterdrucks übermitteln.

Die obigen Ausgestaltungen und Weiterbildungen lassen sich, sofern sinnvoll, beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: ein Ablaufdiagramm eines Verfahrens zum Befüllen von Fluidbehältern gemäß einem Ausführungsbeispiel;
- Fig. 2: eine schematische Ansicht eines Systems zum Befüllen von Fluidbehältern gemäß einem weiteren Ausführungsbeispiel.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

### BESCHREIBUNG VON AUSFÜHRUNGSBEISPIELEN

Der Begriff Druck im Sinne der vorliegenden Erfindung bezeichnet den absoluten Druck, welcher gemäß Definition der Druck gegenüber dem Druck Null im leeren Raum/Vakuum ist.

Als Innen-Liner im Sinne der vorliegenden Erfindung ist ein Kern eines Fluidbehälters bezeichnet, der die innere Sperrschicht des Fluidbehälters, insbesondere von Fluidbehältern aus Verbundwerkstoffen, bildet, um eine gewisse Permeabilität zu gewährleisten und die Dichtheit des Fluidbehälters bereitzustellen. Für diese dünnwandige Sperrschicht werden Materialien, wie Stahl, Edelstahl, Aluminium oder Kunststoff, verwendet.

Ein Vakuum im Sinne der vorliegenden Erfindung ist ein gasgefüllter (luftgefüllter) Raum, in dem der Druck niedriger ist, als der Druck der Umgebungsatmosphäre. Dabei gilt: Je weniger Atome sich innerhalb eines begrenzten Raumes befinden, umso reiner ist das Vakuum, wobei es auf der Erde mit den bisher vorhandenen technischen Mitteln unmöglich ist, ein absolut reines Vakuum zu erzeugen. Je nach dem Druckniveau wird dabei zwischen Grobvakuum, Feinvakuum, Hochvakuum und Ultrahochvakuum (Höchstvakuum) unterschieden.

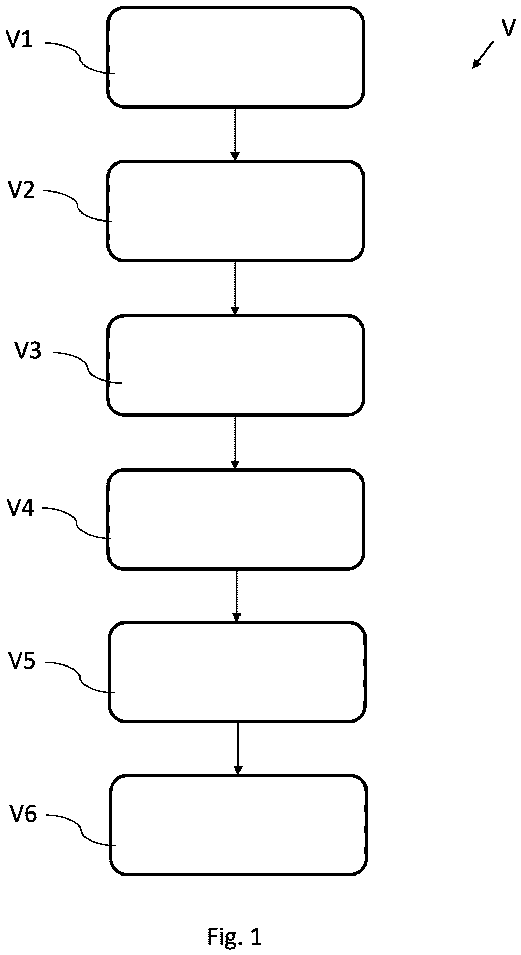

Fig. 1 zeigt beispielhaft ein Ablaufdiagramm eines Verfahrens V zum Befüllen von Fluidbehältern 1. Dieses Verfahren V wird zum Beispiel für eine initiale Befüllung eines Fluidbehälters 1 verwendet.

Der Fluidbehälter 1 gemäß dem Beispiel nach Fig. 1 ist ein sogenannter Typ IV-Behälter aus Verbundwerkstoffen, wie er beispielsweise für Brennstoffzellen verwendet wird, und weist einen Innen-Liner auf. Der Innen-Liner ist dazu ausgebildet, den Fassungsraum 3 des Fluidbehälters 1 gasdicht nach außen abzuschließen.

Das Verfahren V umfasst erfindungsgemäß den Schritt Bereitstellen V1 einer Druckkammer 2 mit einem Druckkammerinnenraum 4. Die Druckkammer 2 entspricht beispielhaft im Wesentlichen einer sogenannten Dekompressionskammer mit einer verschließbaren Zugangstür. Optional kann die Druckkammer 2 auch mehrere Zugangstüren oder Öffnungen aufweisen. Derartige Druckkammern 2 sind ferner im Wesentlichen gewölbt ausgebildet, um den mechanischen Belastungen, die durch die Druckdifferenzen gegenüber der Umgebungsatmosphäre hervorgerufen werden, vorteilhaft standhalten zu können. Dies schließt abschnittsweise gerade ausgebildete Bereiche der Druckkammer 2 jedoch nicht aus. Dabei ist der Druckkammerinnenraum 4 etwa 2 m bis etwa 4 m hoch und weist eine Grundfläche im Bereich von 5 m² bis 200 m², insbesondere im Bereich von 10 m² bis 100 m² auf.

Darüber hinaus umfasst das Verfahren V den Schritt Positionieren V2 des Fluidbehälters 1 innerhalb des Druckkammerinnenraums 4 derart, dass der Fassungsraum 3 des Fluidbehälters 1 fluidisch mit dem Druckkammerinnenraum 4 verbunden ist. Der Fluidbehälter 1 liegt dabei beispielsweise auf einem Transportwagen mit Rollen. Somit kann der Transportwagen bequem von außen in den Druckkammerinnenraum 4 geschoben werden, während der Fluidbehälter 1 auf dem Transportwagen liegen bleibt. Zusätzlich wird dabei beispielhaft ein steuerbares Mehrwegeventil 7 an dem Fluidbehälter 1 befestigt.

Das Verfahren V umfasst ferner den Schritt Evakuieren V3 des Druckkammerinnenraums 4 bis zu einem Zielunterdruck. Das Evakuieren V3 erfolgt dabei in einer Weise, dass sich aufgrund der fluiden Kopplung zunächst eine negative Druckdifferenz in dem Druckkammerinnenraum 4 gegenüber dem Fassungsraum 3 ausbildet. Der gewünschte Zielunterdruck wird zum Beispiel durch Verwendung einer Verdichtereinrichtung 6, die vorzugsweise als Vakuumpumpe ausgebildet ist, erzeugt. Der Schritt des Evakuierens V3 wird gemäß dem Beispiel nach Fig. 1 bis zum Erreichen des gewünschten Zielunterdrucks von höchstens 0,5 bar abs, insbesondere im Bereich von 0,48 bar abs bis 0,4 bar abs, ausgeführt/beibehalten. Wenn der gewünschte Zielunterdruck erreicht ist, wird die Verdichtereinrichtung 6 derart gedrosselt, dass sich die negative Druckdifferenz in dem Druckkammerinnenraum 4 gegenüber dem Fassungsraum 3 wieder ausgleicht.

Des Weiteren wird beispielsweise zu Beginn des Schritts des Evakuierens V3 ein fluidischer Austausch zwischen dem Fassungsraum 3 des Fluidbehälters 1 und dem Druckkammerinnenraum 4 nicht zugelassen. In der Folge steigt in der Anfangsphase des Schritts des Evakuierens V3 die Druckdifferenz zwischen dem Fassungsraum 3 und dem Druckkammerinnenraum 4. Somit kann der Innen-Liner gleich zu Beginn mit einem Innendruck beaufschlagt werden und zudem eine Dichtheitsprüfung des Innen-Liners stattfinden, indem der Innendruck im Fassungsraum 3 gemessen und überwacht wird.

Zusätzlich umfasst das Verfahren V gemäß Fig. 1 nach dem Schritt des Evakuierens V3 den optionalen Schritt Umschalten V4 von einem Evakuierungszustand, in dem ein fluidischer Austausch zwischen dem Fassungsraum 3 des Fluidbehälters 1 und dem Druckkammerinnenraum 4 zugelassen wird, in einen Befüllzustand, in dem ein fluidischer Austausch zwischen dem Fassungsraum 3 des Fluidbehälters 1 und einem Fluidtank 5, welcher mit dem Fassungsraum fluidisch verbunden ist, zugelassen wird. Beispielhaft steuert eine Steuerungseinrichtung das Umschalten V4, wobei die Steuerungseinrichtung hierzu unter anderem den Druck in dem Druckkammerinnenraum 4 und den Druck in dem Fassungsraum 3 verwendet. Die Steuerungseinrichtung sendet dabei beispielsweise entsprechende Steuerungssignale kabelgebunden und/oder drahtlos an das steuerbare Mehrwegeventil 7.

Darüber hinaus umfasst das Verfahren V den Schritt Befüllen V5 des Fluidbehälters 1, indem ein Fluid in den Fassungsraum 3 eingeleitet wird. Das Fluid ist beispielhaft Wasserstoff mit einer Reinheit von mindestens 99,99 Vol.-%, das aus dem Fluidtank 5, welcher mit dem Fassungsraum 3 fluidisch verbunden ist, in den Fassungsraum 3 eingeleitet wird.

Optional umfasst das Verfahren V den Schritt Verringern V6 der negativen Druckdifferenz in dem Druckkammerinnenraum 4 im Vergleich zu einer die Druckkammer 2 umgebenden Umgebungsatmosphäre bis der Druck in dem Druckkammerinnenraum 4 dem Druck der Umgebungsatmosphäre entspricht. Der Schritt des Verringerns V6 der negativen Druckdifferenz wird insbesondere während dem Schritt des Befüllens V5 des Fluidbehälters 1 ausgeführt. Dabei weist der Druck in dem Druckkammerinnenraum 4 stets höchstens den Druck in dem Fassungsraum 3 auf, damit Schäden an dem Innen-Liner vermieden werden.

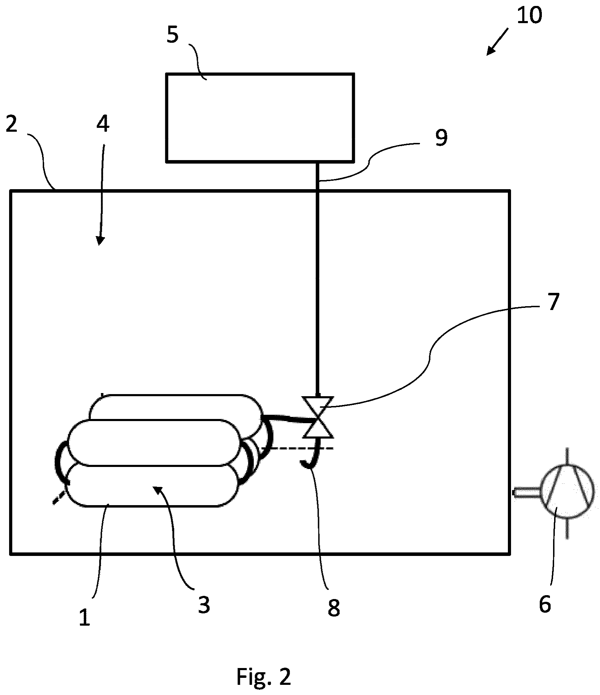

Fig. 2 zeigt beispielhaft eine schematische Ansicht eines Systems 10 zum Befüllen von Fluidbehältern 1.

Das System 10 weist erfindungsgemäß einen Fluidbehälter 1, eine Druckkammer 2 und eine Verdichtereinrichtung 6 auf. Ferner enthält das beispielhaft dargestellte System 10 einen optionalen Fluidtank 5 und ein optionales steuerbares Mehrwegeventil 7.

Die Druckkammer 2 umfasst einen fluiddicht ausgebildeten Druckkammerinnenraum 4. Die Druckkammer 2 ist beispielhaft im Wesentlichen zylinderförmig ausgebildet. Die Druckkammer 2 weist ferner mindestens eine Zugangstür auf. Dabei weist der Druckkammerinnenraum 4 eine Innenhöhe von etwa 2 m bis etwa 4 m eine Grundfläche im Bereich von 5 m² bis 200 m², insbesondere im Bereich von 10 m² bis 100 m² auf. Ebenso kann die Druckkammer 2 gemäß dem Beispiel nach Fig. 2 auch mit Merkmalen der Druckkammer 2 gemäß dem Beispiel nach Fig. 1 kombiniert sein.

Der Fluidbehälter 1 ist innerhalb des Druckkammerinnenraums 4 positioniert. Der Fassungsraum 3 des Fluidbehälters 1 ist zudem mit dem Druckkammerinnenraum 4 fluidisch verbindbar. Beispielsweise weist der Fluidbehälter 1 eine Auslassöffnung 8 auf, welche sich in den Druckkammerinnenraum 4 erstreckt und verschließbar ist. In dem Beispiel nach Fig. 2 ist der Fluidbehälter 1 aus einem Stahl oder einer Stahllegierung hergestellt.

Die Verdichtereinrichtung 6 ist beispielsweise außerhalb der Druckkammer 2 angeordnet und mit der Druckkammer 2 fluidisch gekoppelt. Die Verdichtereinrichtung 6 ist ferner ausgebildet, eine negative Druckdifferenz in dem Druckkammerinnenraum 4 gegenüber dem Fassungsraum 3 zu erzeugen. Alternativ oder zusätzlich ist die Verdichtereinrichtung 6 dazu ausgebildet, in dem Druckkammerinnenraum 4 einen Unterdruck im Vergleich zu der die Druckkammer 2 umgebenden Umgebungsatmosphäre zu erzeugen.

Der Fluidtank 5 ist beispielsweise außerhalb der Druckkammer 2 angeordnet und mit dem Fassungsraum 3 fluidisch verbindbar. Dabei ist der Fluidtank 5 beispielsweise über eine Schlauchleitungseinrichtung 9 mit dem Fassungsraum 3 fluidisch verbunden, wobei Schläuche der Schlauchleitungseinrichtung 9 insbesondere als formstabiler Schlauch ausgebildet sind. Alternativ oder zusätzlich kann der Fluidtank 5 über ein Rohrleitungssystem mit dem Fassungsraum 3 verbunden sein. Ferner ist der Fluidtank 5 dazu ausgebildet, ein Fluid in den Fassungsraum 3 einzuleiten.

Das steuerbare Mehrwegeventil 7 ist in Fig. 2 beispielhaft mit mehreren Fluidbehältern 1 fluidisch verbunden und in der Lage zwischen einem Evakuierungszustand und einem Befüllzustand umzuschalten. In dem Evakuierungszustand ist ein fluidischer Austausch zwischen dem Fassungsraum 3 der Fluidbehälter 1 und dem Druckkammerinnenraum 4 zugelassen. In dem Befüllzustand ist ein fluidischer Austausch zwischen dem Fassungsraum 3 der Fluidbehälter 1 und dem Fluidtank 5 zugelassen.

Das Fluid ist beispielsweise flüssiger Wasserstoff, welcher bei etwa 200 bar bis 300 bar in dem Fluidtank 5 gespeichert ist und in dem Befüllzustand durch die Druckdifferenz zu dem Fassungsraum 3 der Fluidbehälter 1 eine Strömungsrichtung in den Fassungsraum 3 hinein aufweist.

Das in Fig. 2 dargestellte System 10 ist erfindungsgemäß dazu ausgebildet, das Verfahren V gemäß dem Beispiel nach Fig. 1 oder gemäß einem nicht detailliert beschriebenen Verfahren V, das zumindest die wesentlichen Verfahrensmerkmale der vorliegenden Erfindung umfasst, auszuführen.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### Bezugszeichenliste

- 1: Fluidbehälter
- 2: Druckkammer
- 3: Fassungsraum
- 4: Druckkammerinnenraum
- 5: Fluidtank
- 6: Verdichtereinrichtung
- 7: Mehrwegeventil
- 8: Auslassöffnung
- 9: Schlauchleitungseinrichtung
- 10: System

- V: Verfahren
- V1: Bereitstellen
- V2: Positionieren
- V3: Evakuieren
- V4: Umschalten
- V5: Befüllen
- V6: Verringern

## Patentansprüche

1. Verfahren zum Befüllen von Fluidbehältern (1), mit den Schritten:
Schaffen einer kontrollierten Atmosphäre in welcher Fluidbehälter positioniert sind, bei der sich der Druck gezielt steuern lässt und eine Druckdifferenz zwischen dem Äußeren und dem Inneren des Fluidbehälters derart einstellt, dass ein Schaden an einem Innen-Liner der Fluidbehälter verhindert wird, wobei der die Fluidbehälter umgebende Raum als Druckkammer ausgebildet ist und ein geschlossenes System mit einstellbaren Druckverhältnissen bereitstellt, wobei die Druckkammer den Druckkammerinnenraum hermetisch gegenüber einer Umgebung abschließt;
Evakuieren des Fluidbehälters; und
bei Erreichen eines Zielunterdrucks, bei dem ein Fassungsraum des Fluidbehälters ein Vakuum aufweist beziehungsweise lediglich eine vorbestimmte akzeptable Restmaterie enthält,
Befüllen des Fassungsraums des Fluidbehälters mit einem Fluid, welches nicht durch das zuvor in dem Fassungsraum enthaltene Fluid kontaminiert ist.

2. Verfahren nach Anspruch 1,
**dadurch gekennzeichnet,**
**dass** der Innen-Liner aufweist dazu ausgebildet ist, den Fassungsraum (3) des Fluidbehälters (1) gasdicht nach außen abzuschließen.

3. Verfahren nach einem der vorstehenden Ansprüche, **dadurch gekennzeichnet,**
**dass** das Befüllen durch Umschalten von einem Evakuierungszustand in einen Befüllzustand, in dem ein fluidischer Austausch zwischen dem Fassungsraum (3) des Fluidbehälters (1) und einem Fluidtank (5), welcher mit dem Fassungsraum fluidisch verbunden ist, zugelassen wird

4. Verfahren nach einem der vorstehenden Ansprüche, **dadurch gekennzeichnet,**
**dass** der Zielunterdruck durch Verwendung einer Verdichtereinrichtung (6) erzeugt wird.

5. Verfahren nach einem der vorstehenden Ansprüche, **gekennzeichnet durch**
den weiteren Schritt:
Verringern (V6) einer negativen Druckdifferenz in dem Drucckammerinnenraum (4) im Vergleich zu einer die Druckkammer (2) umgebenden Umgebungsatmosphäre bis der Druck in dem Druckkammerinnenraum (4) dem Druck der Umgebungsatmosphäre entspricht.

6. Verfahren nach Anspruch 5,
**dadurch gekennzeichnet,**
**dass** der Schritt des Verringerns (V6) der negativen Druckdifferenz während dem Schritt des Befüllens (V5) des Fluidbehälters (1) ausgeführt wird, wobei der Druck in dem Drucckammerinnenraum (4) stets höchstens den Druck im Fassungsraum (3) aufweist.

7. Verfahren nach einem der vorstehenden Ansprüche,
**dadurch gekennzeichnet,**
**dass** das Verfahren (V) für eine initiale Befüllung des Fluidbehälters (1) verwendet wird.

8. Verfahren nach einem der vorstehenden Ansprüche,
**dadurch gekennzeichnet,**
**dass** das Fluid Wasserstoff enthält, insbesondere aus hochreinem Wasserstoff besteht, und aus einem Fluidtank (5), welcher mit dem Fassungsraum (3) fluidisch verbunden ist, in den Fassungsraum (3) eingeleitet wird.

9. Verfahren nach einem der vorstehenden Ansprüche,
**dadurch gekennzeichnet,**
**dass** der Fluidbehälter (1) ein Typ IV-Behälter ist.

10. System (10) zum Befüllen von Fluidbehältern, insbesondere zur Ausführung eines Verfahrens (V) nach einem der Ansprüche 1 bis 9,
mit einer Druckkammer (2), welche ein geschlossenes System mit einstellbaren Druckverhältnissen bereitstellt, wobei die Druckkammer den Druckkammerinnenraum (4) hermetisch gegenüber einer Umgebung abschließt.;
mit einem Fluidbehälter (1), der innerhalb des Druckkammerinnenraums (4) positioniert ist; und
mit einer Verdichtereinrichtung (6), die ausgebildet ist, eine negative Druckdifferenz in dem Druckkammerinnenraum (4) gegenüber dem Fassungsraum (3) zu erzeugen, sodass in einer kontrollierten Atmosphäre in welcher Fluidbehälter positioniert sind, sich der Druck gezielt steuern lässt und eine Druckdifferenz zwischen dem Äußeren und dem Inneren des Fluidbehälters derart einstellt, dass ein Schaden an einem Innen-Liner der Fluidbehälter bei Evakuieren des Fluidbehälters verhindert wird; und
ein Fluidtank (5), welcher mit dem Fassungsraum (3) derart fluidisch verbindbar ist, um ein Fluid in den Fassungsraum (3) einzuleiten, so dass bei Erreichen eines Zielunterdrucks, bei dem der Fassungsraum des Fluidbehälters ein Vakuum aufweist beziehungsweise lediglich eine vorbestimmte akzeptable Restmaterie enthält, der Fassungsraum des Fluidbehälters mit dem Fluid befüllt wird, welches nicht durch das zuvor in dem Fassungsraum enthaltene Fluid kontaminiert ist.

11. System nach Anspruch 10,
**dadurch gekennzeichnet,**
**dass** der Innen-Liner dazu ausgebildet ist, den Fassungsraum (3) des Fluidbehälters (1) gasdicht nach außen abzuschließen.
